# EUROPÄISCHE PATENTSCHRIFT

(11) **EP 1 166 695 B1**
(45) Veröffentlichungstag und Bekanntmachung des Hinweises auf die Patenterteilung: **02.02.2005**
(21) Anmeldenummer: 00112873.5
(22) Anmeldetag: 19.06.2000
(51) Int. Cl.: A47J 31/06

(54) **Gerät zum Zubereiten heisser Getränke**
Device for preparing heated beverages
Dispositif pour préparer des boissons chaudes

(43) Veröffentlichungstag der Anmeldung: 02.01.2002
(73) Patentinhaber: Repschläger, Werner, 40210 Düsseldorf (DE)
(72) Erfinder: Repschläger, Werner, 40210 Düsseldorf (DE)
(74) Vertreter: Schulte, Jörg, Dipl.-Ing.

(56) Entgegenhaltungen:
- FR-A- 2 634 365
- US-A- 2 061 119
- US-A- 2 684 624
- US-A- 4 112 831
- US-A- 4 986 172

## Beschreibung

Die Erfindung betrifft ein Gerät zum Zubereiten heißer Getränke aus einem Getränkesubstrat und einer Flüssigkeit mit einem die Flüssigkeit zunächst aufnehmenden Heizbehälter mit Heißwasser-Auslauf und einer zugeordneten, das Getränkesubstrat aufnehmenden Filterkammer mit Filtereinsatz und Filter, der vor dem Getränkeauslass zum Getränkebehälter angeordnet ist, wobei die Filterkammer mit einem flächigen Siebboden ausgerüstet ist, auf den der Filter auflegbar und der Filtereinsatz aufsetzbar ist.

Solche Geräte werden meist zum Zubereiten von Kaffee, Tee oder ähnlichen Getränken verwendet, wobei gerade für die Aufbereitung von Kaffee verschiedene Verfahren zur Beeinflussung des Kaffeemehls, d. h. also des Getränkesubstrates bekannt sind. Zu nennen ist hier das Rinnsalbrühen, das Schwallbrühen oder das Druckbrühen, wobei das Druckbrühen insbesondere in den südlichen Ländern in Form Espresso-Maschinen verwirklicht wird. Dabei wird das Wasser meist in gleichem Gerät auch so weit erhitzt, dass es dann in Rinnsalform oder aber per Schwall auf das Kaffeemehl oder das sonstige Getränkesubstrat aufgegeben wird, das in einem tütenartigen Filter zurückgehalten wird, sodass das heiße Wasser das Getränkesubstrat auslaugen kann. Die heiße Flüssigkeit gelangt dann in einen Getränkebehälter, aus dem sie je nach Bedarf mengenmäßig abgenommen wird. Allen bekannten Geräten und Verfahren ist gemeinsam, dass das in der Regel in Pulverform vorliegende Getränkesubstrat insbesondere beim Rinnsalbrühen, aber auch bei den anderen Zubereitungsformen, nur nach und nach von dem heißen Wasser durchsetzt und so beeinflusst wird, dass ein mehr oder weniger ausreichendes Auslaugen erfolgen kann (US-A-2 061 119). Es hat schon mehrere Versuche gegeben, die Auslaugung des Getränkesubstrates zu verbessern, beispielsweise in dem zunächst das heiße Wasser zurückgehalten wird, bevor es dann schwallweise ablaufen kann. Aber auch hierbei ist von Nachteil, dass eine gleichmäßige Auslaugung nicht erfolgt oder erst zu spät erfolgt, weil bei dieser Art der Durchlaugung das trockene Kaffeemehl oben auf der Flüssigkeit aufschwimmt, bevor diese das Kaffeemehl oder das sonstige Getränkesubstrat richtig durchlaugen kann. Bei der US-A-2 061 119 und auch bei der US-A-4 986 172 kommt ein Filtereinsatz zum Tragen, der auf den Siebboden aufgesetzt ist. Die wirksame Filterfläche des Siebbodens wird dadurch aber nicht verändert. Die FR-A-2 634 365 zeigt einen als Wasserverteiler ausgebildeten Deckel. Einzelheiten zum Filtereinsatz sind nicht gezeigt.

Der Erfindung liegt daher die Aufgabe zugrunde, ein insbesondere zum Aufbrühen von Bohnenkaffee geeignetes Gerät zu schaffen, bei dem die wirksame Fläche des Filters dem Bedarf entsprechend einfach angepasst werden kann.

Die Aufgabe wird gemäß der Erfindung dadurch gelöst, dass der Filtereinsatz als Wendeeinsatz ausgebildet ist und auf beiden Seiten Stützränder unterschiedlicher Breite aufweist, die durch Abdecken eines mehr oder weniger großen Kreisringes bzw. Ringstreifens die wirksame Filterfläche und die Menge des Getränkesubstrates bestimmend ausgebildet sind.

Mit einer derart ausgebildeten Filterkammer kann egal, ob man das Rinnsalbrühen oder das Schwallbrühen oder auch das Druckbrühen einsetzt, das gesamte Getränkesubstrat schnell und gleichförmig so durchnässt werden, dass eine gleichmäßige Abgabe eines sauber gefilterten Getränkes erfolgen kann. Das Wasser oder die sonstige Flüssigkeit wird auf den flächigen Filter verteilt aufgegeben, sodass eine schnelle und gleichmäßige Durchfeuchtung erfolgen kann. Die dazu benötigten Verteiler sind weiter hinten beschrieben. Wichtig ist aber, dass eine entsprechende flächige Ausbildung des Siebbodens eine gleichmäßig dicke Ablagerung des Getränkesubstrates zulässt, das dann eben auch entsprechend gut durchnässt werden kann. Die durchgehend gleiche Schichtdicke des Getränkesubstrates, die vergleichmäßigte Aufträufelung oder Aufbringung der Flüssigkeit, d. h. des Wassers und die der Menge des Getränkesubstrates optimal anzupassende oder angepasste wirksame Filterfläche führen dazu, dass das Getränkesubstrat optimal durchlaugt und ausgelaugt werden kann. Über den als Wendeensatz ausgebildeten Filtereinsatz wird die Filterfläche der gewünschten Tassenzahl entsprechend verändert, d. h. verkleinert oder vergrößert. Dabei macht sich die Erfindung zu Nutze, dass bei einem kreisrunden oder auch ovalen Siebboden durch Abdecken eines rundum verlaufenden "Ringdeckels" bzw. Ringstreifens eine verhältnismäßig große Filterfläche abgedeckt werden kann, sodass die Menge des Getränkesubstrates und damit auch der Flüssigkeit mit wenigen Handgriffen der Menge des Getränkesubstrates und auch der Flüssikeit angepasst werden kann. Hierzu ist der untere Rand, wie noch weiter hinten erläutert, unterschiedlich breit ausgebildet, d. h. es deckt einen mehr oder weniger großen Kreisring der Filterfläche ab, sodass der Benutzer lediglich die Wassermenge darauf einstellen muss. Durch den Wendeeinsatz kann man mit einem einzelnen Filtereinsatz unterschiedlichste Mengen vorgeben, wobei schon der Filtereinsatz allein zwei unterschiedliche Ringstreifen vorgibt, der dritte Ringstreifen wäre der, bei dem ohne Filtereinsatz gearbeitet wird.

Nach einer zweckmäßigen Weiterbildung der Erfindung ist vorgesehen, dass der Boden der Filterkammer Stufen aufweisend ausgebildet ist, wobei die den Siebboden aufnehmende Stufe die Sitzfläche für den Getränkebehälter vorgebend ausgeführt ist. In der jeweils unteren Stufe ist der Siebboden angeordnet, sodass er beispielsweise in den Getränkebehälter hineinragt und verhindert, dass der entsprechende Teil des Gerätes versehentlich vom Getränkebehälter abgehoben oder abgeschoben wird. Es gibt natürlich auch andere Sicherungsmöglichkeiten, wobei diese den Vorteil hat, dass gleichzeitig damit auch eine optimale Sitzfläche vorhanden ist, sodass auch ein Temperaturschutz gegeben ist, der verhindert, dass das Getränk frühzeitig abkühlt.

Eine weitere zweckmäßige Ausbildung ist die, bei der der Siebboden sich auf einen Vorsprung der Stufe abstützend lösbar mit der Filterkammer verbunden ist, wobei dies den Vorteil hat, dass der Siebboden leicht gereinigt werden kann. Andererseits kann dann der Siebboden auch leicht mit dem Kaffeemehl oder dem sonstigen Substratrest entfernt werden, sodass in aller Regel sich eine Verbindung des Siebbodens mit der Filterkammer als zweckmäßig erweist.

Soll die Durchlaufgeschwindigkeit erhöht werden, so ist es von Vorteil, dass die dem Kammerinnenraum zugewandte Oberfläche des Siebbodens mit zwischen den Bohrungen angeordnete Noppen ausgerüstet ist. Der Rundpapierfilter liegt dann auf diesen Noppen auf, ohne dass die Gefahr besteht, dass das Papiermaterial überlastet wird, weil die Noppen für eine ausreichende Abstützung sorgen. Die Noppen sorgen für eine erhöhte Durchlaufgeschwindigkeit, nicht aber für eine verbesserte Auslaugung des Getränkesubstrates. Hierzu ist es erforderlich, dass die Zahl der Bohrungen gegenüber einer keine Noppen aufweisenden Oberfläche reduziert, vorzugsweise auf unter ein Drittel reduziert ist. Durch die Reduzierung der Bohrungen wird die Durchlaufgeschwindigkeit dann entsprechend beeinflusst, um so das Auslaugen des Getränkesubstrates abzusichern. Eine vorteilhafte Beeinflussung der Auslaugung und des Ablaufes der Flüssigkeit ist möglich, indem der Siebboden zur Bodenmitte hin einfallend ausgebildet ist, wobei die Länge der Noppen gleichförmig zur Bodenmitte hin zunimmt. Damit liegt der Rundpapierfilter eben auf den Noppen auf, obwohl der eigentliche Siebboden ein zur Mitte gerichtetes Gefälle aufweist. Dies führt zu der schon erwähnten Wirkungsoptimierung.

Einmal um den wahlweise wirksam werdenden Randstreifen zu kennzeichnen und zum anderen um die Durchlaufgeschwindigkeit in diesem Randstreifen auch noch zu optimieren, ist vorgesehen, dass der vom Filtereinsatz zu verdeckende Randstreifen im Abstand angeordnete Stege aufweist, die an der Wandung der Filterkammer und einem die Lochplatte begrenzenden Stützring befestigt sind. Mittig ist dementsprechend die oben schon erwähnte Lochplatte vorhanden, die über den Stützring begrenzt ist, an den dann die Stege angreifen, die die Verbindung zur Wandung der Filterkammer darstellen. Der Abstand der Stege kann dem Bedarf entsprechend verändert werden, wobei gemäß der Erfindung vorgesehen ist, dass hier allenfalls die gleiche oder eine geringfügig schnellere Durchlaufgeschwindigkeit als im übrigen Bereich der Lochplatte gegeben sein soll. Die Reinigung des Siebbodens ist im Bereich der Lochplatte und im Bereich der Stege etwa gleich problemlos möglich, einmal indem man einfach klares Wasser durchlaufen lässt oder in Extremfällen auch einmal die gesamte Filterkammer reinigt, beispielsweise indem sie einen Durchlauf in der Spülmaschine mitmacht.

Die Lochplatte oder auch der gesamte Siebboden werden in einem Arbeitsgang mit der gesamten Filterkammer hergestellt, wobei es von Vorteil ist, wenn die Bohrungen im Siebboden eine Kreisform aufweisen und eine senkrechte Bohrungswandung erhalten. Damit ist über die gesamte Filterfläche die gleiche Filterwirkung bzw. die gleiche Zurückhaltung des Getränkesubstrates gewährleistet, sodass ein gleichmäßiger Erfolg der Befeuchtung und Auslaugung gesichert ist.

Weiter vorn ist bereits darauf hingewiesen worden, dass die Wirkung des Filtereinsatzes durch unterschiedlich breite Stützränder verwirklicht wird. Der Filtereinsatz liegt mit seinem Stützrand auf dem Filterpapier bzw. auf dem Siebboden auf und verdeckt somit einen bestimmten Ringbereich bzw. Ringstreifen, der dann nicht mehr als Filterfläche zur Verfügung steht. Es gibt dabei mehrere Möglichkeiten, die Menge des eingefüllten Getränkesubstrates zu variieren bzw. den Notwendigkeiten entsprechend anzupassen. Auf jeden Fall aber steht eben schon durch den größeren oder kleineren Ringraum oberhalb des Stützrandes ein mehr oder weniger großer Kammerbereich zur Verfügung, in den das Getränkesubstrat eingefüllt werden kann, um so auch gleichzeitig die Filtermenge bzw. die Flüssigkeitsmenge mit zu beeinflussen. Eine vorteilhafte Systematik erreicht man dabei dadurch, dass der Filtereinsatz einen Stützrand aufweist, der einen vorbestimmten Ringstreifen des Siebbodens abdeckend breit ausgebildet ist, eine die jeweilige Getränkesubstratmenge ungefähr vorgebende Höhe aufweist und sich vom entsprechend vorgegebenen Innenrand aus trichterförmig erweiternd ausgeführt ist. Der Stützrand deckt also einen bestimmten, vorgegebenen Ringstreifen ab, wobei natürlich die Breite des Stützrandes so variiert werden kann, dass die dann eingefüllte und beeinflusste Getränkesubstratmenge für 2 bis 4 Tassen bzw. 5 bis 8 Tassen ausreicht. Der Stützrand bildet einen Ringraum, der bis in Höhe des sogenannten Innenrandes reicht, von wo aus dann eine trichterförmige Weiterführung der Wandung vorhanden ist, sodass das von oben her eingeträufelte oder eingeschüttete Heißwasser sich entsprechend gleichmäßig auf die Oberfläche des Getränkesubstrates verteilen kann und zwar ohne Trichterbildung. Vielmehr wird, wie weiter hinten noch erläutert wird, durch Zusätze dann sogar eine völlig gleichmäßige Beeinflussung der gesamten Oberfläche des eingefüllten Getränkesubstrates sichergestellt, sodass eine sehr schnelle und gleichmäßige Durchfeuchtung und Auslaugung des Getränkesubstrates gesichert ist.

Zwischen dem Filtereinsatz und der Wandung der Filterkammer könnte Wasser aufsteigen, ohne das Getränkesubstrat zu beeinflussen bzw. ohne direkt in den Getränkebhälter abzufließen. Um dies zu verhindern, kann es zweckmäßig sein, in der Außenwand des Stützrandes und/oder der Stufe eine Nut für einen O-Ring auszubilden oder auch mehrere, sodass dieser Bereich völlig abgedichtet ist und zwar auf Dauer. Vorteilhaft ist dabei gleichzeitig, dass dadurch der genaue Sitz des Filtereinsatzes gewährleistet ist, weil mit dem Einsetzen der Benutzer sofort merkt, wenn der Filtereinsatz seine optimale Position eingenommen hat.

Zusätzlich oder statt der Nut und O-Ringe ist es vorgesehen, dass der Filtereinsatz den Stützrand und den Innenrand mit Trichter mit der Innenwand der Filterkammer abstützend verbindende, im Abstand zueinander angeordnete Profilrippen aufweist. Ein derartiger Filtereinsatz stützt sich also nicht nur im Bereich des Stützrandes ab, sondern auch über die Profilrippen, sodass ein immer sicherer und gleichförmiger Sitz des Filtereinsatzes oder der Filtereinsätze gewährleistet werden kann.

Besonders zweckmäßig ist es, wenn über den Umfang verteilt vier Profilrippen vorgesehen sind, weil dann eine sehr gleichmäßig bzw. gleichförmige Abstützung gegeben ist. Denkbar sind auch drei Profilrippen, doch haben vier Profilrippen den Vorteil, dass jedes Kippeln oder Ähnliches verhindert ist und die Profilrippen sich auf der Filterkammer bzw. der Innenwand der Filterkammer an geeigneten Stellen abstützen kann.

Das gleichmäßige Einfüllen des Getränkesubstrates kann dadurch erleichtert werden, dass der Innenrand eine Markierung ergebend ausgebildet, vorzugsweise geformt ist. Damit wird für den Benutzer klar, dass er das entsprechende Getränkesubstrat immer nur bis zum Innenrand hin auffüllt, wobei dies die optimale Getränkesubstratmenge ist. Wird mehr Kaffeesubstrat eingefüllt, ist dies nicht schädlich, nur wird dann eventuell ein zu starker Kaffee bzw. eine entsprechende Flüssigkeit erreicht.

Die beschriebenen vier Profilrippen sind für die üblichen kreisrunden Geräte vorgesehen, wobei aber auch davon abweichende ovale oder ähnliche ausgebildete Geräte bzw. Filterkammern und entsprechend auch Getränkebehälter zum Einsatz kommen können. Die Erfindung sieht dann vor, dass die Profilrippen bzw. eine der Profilrippen bei einer vom Kreis abweichenden Ausführung der Filterkammer in den Leerkammeransatz hineinreichend ausgebildet ist. Diese Profilrippe verstärkt und stabilisiert dann nicht nur den Leerkammeransatz, sondern die gesamte Filterkammer vorteilhaft. Bei einer ovalen Ausführung kann der Leerkammeransatz als solcher an zwei Seiten vorhanden sein, sodass die gegenüberliegenden Profilrippen in diese Kammeransätze hineingezogen und diese stabilisierend ausgeführt sind. Dabei ist gemäß einer Weiterbildung vorgesehen, dass der in den Leerkammeransatz hineinreichenden Profilrippe eine mit dem Filtereinsatz verbundene Grifföse zugeordnet ist, sodass man den gesamten Filtereinsatz leicht herausnehmen und säubern kann, wenn dies als notwendig erachtet wird. Die Grifföse kann auf unterschiedliche Art und Weise ausgeführt sein. Den Leerraum des Leerkammeransatzes kann man auch für andere Dinge einzusetzen, weil der Hohlraum für den Filtervorgang als solcher nicht benötigt wird. Vor allem ist es möglich, die Wasserrohre in dem LeerLeerkammeransatz anzuordnen.

Beim gleichmäßigen Verteilen der Flüssigkeit auf das Getränkesubstrat wird mehr oder weniger automatisch Wasserdampf freigesetzt, der aber für den Filtervorgang optimal ausgenutzt werden kann, wenn der Filterkammer ein lösbar ausgebildeter Deckel mit einer Heißwasser-Zulauföffnung zugeordnet ist, der über eine Art Labyrinthdichtung mit der Filterkammer verbindbar ist. Solche Deckel sind auch bei bekannten Geräten bereits im Einsatz, allerdings ohne die optimale Abdichtung im Randbereich, wobei der Heißwasser-Zulauf in der Regel mittig des Deckels erfolgt, sodass durch die Größe der Heißwasser-Zulauföffnung hier auch eine gewisse Sperre erreicht werden kann. Die Flüssigkeit verteilt sich dann auf der Filterfläche bzw. dem darauf aufliegenden Getränkesubstrat durchfeuchtet dies und laugt es aus, sodass dann das entsprechende Getränk bzw. die Flüssigkeit in den Getränkebhälter abgeleitet werden kann. Dieser ganze Filtervorgang wird eben dadurch begünstigt, dass der entstehende oder freigesetzte Wasserdampf praktisch nicht entweichen kann.

Das Entweichen des Wasserdampfes wird gemäß einer Weiterbildung der Erfindung auch im Bereich der Heißwasser-Zulauföffnung reguliert und weitgehend verhindert, indem auf der Innenseite des Deckels und im Abstand zur Heißwasser-Zulauföff nung ein Wasserverteiler angeordnet ist. Dieser Wasserverteiler hat eine Doppelfunktion, indem er einmal wie beschrieben als Dampfsperre dient, zum anderen aber dazu wesentlich beträgt, dass das die Heißwasser-Zulauföffnung passierende heiße Wasser sich gleichmäßig über den gesamten flächigen Filter verteilt bzw. den darauf liegenden Getränkesubstratkuchen. Der Wasserverteiler sorgt dabei dafür, dass das Getränkesubstrat im Gesamtbereich des Filtereinsatzes bzw. des Siebbodens sich mit dem Getränkesubstrat verbinden, dieses durchfeuchten und auslaugen kann. Versuche haben gezeigt, dass durch den entsprechenden Wasserverteiler das Durchlaugen des Getränkesubstrates weitgehend so beschleunigt werden kann, dass praktisch die Gesamtmenge annähernd gleichzeitig mit Wasser durchfeutet und ausgelaugt ist. Der Wasserverteiler hängt dabei praktisch auf der Innenseite des Deckels in geringem Abstand dazu, wobei dieser Abstand den Gegebenheiten entsprechend auch noch variiert werden kann, indem die entsprechenden den Wasserverteiler haltenden Stege teleskopartig ausgebildet sind. In aller Regel reicht es aber aus, wenn der Wasserverteiler die die Heißwasser-Zulauföffnung passierende Wassermenge einfach vergleichmäßigt, sodass das Wasser dann gleichzeitig flächig auf das Getränkesubstrat aufgeträufelt werden kann.

Zur leichteren Reinigung des Wasserverteilers ist es zweckmäßig, diesen lösbar mit dem Deckel zu verbinden, sodass er auch allein, d. h. auch ohne den Deckel einer Reinigung unterzogen werden kann.

Das Ablösen des Wasserverteilers vom Deckel ist auf einfache und zweckmäßige Weise möglich, wenn auf der Innenseite des Deckels mehrere Stege auf einem Kreisbogen angeordnet sind, die Gewindeansätze aufweisen, die mit einem Gewinde an der Innenflanke eines den Wasserverteiler tragenden Kreisringes korrespondierend angeordnet und ausgebildet sind. Der eigentliche Wasserverteiler kann mit einer leichten Drehbewegung dann von den Stegen und damit vom Deckel gelöst und gereinigt werden, um auf die gleiche Art und Weise auch wieder daran festgelegt zu werden. Ein weiterer Vorteil dabei ist aber vor allem auch, dass der Wasserverteiler als solches seitlich abgedeckt ist, also eine Art Becher bildet, der nur im Bodenbereich die Löcher aufweist, durch die das Wasser herunterträufeln kann. Damit wirkt der Wasserverteiler optimal als die schon weiter vorne erwähnte Wärmesperre, die verhindert, dass der freigesetzte Wasserdampf sich aus der Filterkammer verflüchtigt.

Die Wirkung als Wärmesperre wird noch dadurch optimiert, dass der Wasserverteiler aus Kunststoff besteht und über einen Lochboden verfügt, wobei eine zweckmäßige Weiterbildung dazu vorsieht, dass die Lochungen im Lochboden einen unten offenen Trichter bildend ausgeführt sind, sodass das Durchströmen des Wasserdampfes weiter erschwert ist.

Das gleichmäßige Abtropfen oder Durchströmen des Wasserverteilers wird optimiert, indem der Lochboden vom lochfrei ausgebildeten Mittelpunkt zum Rand hin geringfügig abfallend ausgeführt ist. Das heiße Wasser wird somit zwangsweise vom Mittelpunkt zum Rand geführt, sodass über die gesamte Fläche gesehen gleichmäßig viel Wasser ausströmen kann.

Neben der Möglichkeit, den Wasserverteiler dem Deckel zuzuordnen ist gemäß der Erfindung auch die Möglichkeit gegeben, den Wasserverteiler mit dem Filtereinsatz zu einer Einheit zu verbinden, wobei der Filtereinsatz auf der Innenwand des Stützrandes einen ringplattenförmigen Wasserverteiler aufnehmende Ansätze aufweist, auf den also der Wasserverteiler aufgelegt oder aufgeschraubt oder sonst auf eine zweckmäßige Art und Weise angebracht wird, um mit dem Drehen beispielsweise des Wendefiltereinsatzes den Filtereinsatz leicht wieder entfernen oder anbringen zu können. Der Nachteil ist beim Wendefiltereinsatz, dass aufgrund der unterschiedlichen Durchlässe unterschiedlich große Wasserverteiler zum Einsatz kommen, wobei es auch denkbar ist, dass der Wasserverteiler seitlich Ansätze aufweist, die es ihm immer ermöglichen, auf die Ansätze am Stützrand aufgesetzt zu werden, ohne dass es für die unterschiedlichen Durchlässe unterschiedlich großer Wasserverteiler bedarf.

Die Erfindung zeichnet sich insbesondere dadurch aus, dass ein Gerät geschaffen ist, bei dem unabhängig von der eingefüllten Getränkesubstratmenge eine immer gleichmäßige und schnelle Durchfeuchtung und Auslaugung sichergestellt ist. Hierzu ist ein flächiger Filter vorgesehen, auf den oder auf das das Kaffeemehl oder sonstige Getränkesubstrat mehr oder weniger gleichmäßig aufgelegt wird und dann von oben über die gesamte Fläche gesehen mit heißem Wasser durchfeuchtet und ausgelaugt wird. Über den als Wendeeinsatz ausgebildeten Filtereinsatz kann die wirksame Filterfläche eingestellt oder verändert und damit dem Bedarf entsprechend vorgegeben werden. Damit kann bei optimaler Mehlausnutzung drucklos schnell und optimal ein gefiltertes Getränk hergestellt werden, ohne dass die Gefahr besteht, dass durch unregelmäßiges Herabträufeln des heißen Wassers sich Trichter bilden, die dann auch noch das gleichmäßige Durchfeuchten des Getränkesubstrates beeinträchtigen oder gar verhindern. Die vorgelegte Erfindung ist insbesondere dann optimal, wenn neben dem flächigen Filtereinsatz bzw. dem flächigen Siebboden und dem einfachen Filterpapier auch noch ein Wasserverteiler zum Einsatz kommt, der das gleichmäßige Verteilen des heißen Wassers über die gesamte Filterfläche sicherstellt. Insgesamt gesehen ist damit nicht nur eine Optimierung des Filtervorganges erreicht, sondern die Säuberung der einzelnen Teile des Filters bzw. der Filterkammer ist viel einfacher möglich, sodass ein insgesamt hygienisch einwandfreies Filtersystem zur Verfügung steht. Während bei den bekannten trichterförmigen Filtern das Filterpapier bzw. die Filtertüte über Rillen zum Abstand zur eigentlichen Innenwand gehalten werden müssen, kann beim erfindungsgemäßen Gerät der Papierfilter einfach auf den Siebboden aufgelegt werden, ohne dass es weiterer Maßnahmen unbedingt bedarf. Die Bohrungen in dem Siebboden sorgen mit dem Filterpapier dann dafür, dass das ausgelaugte Getränkesubstrat sicher zurückgehalten wird und die von Schwebstoffen freigehaltene Flüssigkeit sicher durchläuft und zwar in einer vorher vorgegebenen Geschwindigkeit, die eine weitreichende Auslaugung des Getränkesubstrates sicherstellt. Die erfindungsgemäße Ausführung des Gerätes ist pflegeleichter, hygienischer und auch vom Auslaugungsprozess her optimaler, sodass ein eindeutiger technischer Fortschritt erreicht ist. Dabei kann das Gerät sowohl zum Rinnsalbrühen, wie auch zum Schwallbrühen und unter gewissen Voraussetzungen auch zum Druckbrühen beispielsweise von Kaffee vorteilhaft eingesetzt werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Filterkammer mit Wendeeinsatz im Schnitt,
- Fig. 2: den Wendeeinsatz in gewendeter Position,
- Fig. 3: eine Filterkammer mit Einfachfiltereinsatz im Schnitt,
- Fig. 4: eine perspektivische Wiedergabe der Filterkammer gem. Fig. 1,
- Fig. 5: den Filtereinsatz gem. Fig. 1 von der Außenseite her gesehen,
- Fig. 6: eine Draufsicht auf einen Siebboden mit Noppen,
- Fig. 7: den Siebboden gem. Fig. 6 im Schnitt,
- Fig. 8: einen Schnitt durch eine Filterkammer mit herausnehmbarem Siebboden,
- Fig. 9: den Siebboden in vergrößerter Wiedergabe,
- Fig. 10: die Filterkammer mit Deckel und Wasserverteiler,
- Fig. 11: einen Schnitt durch den Wasserverteiler,
- Fig. 12: einen Schnitt durch eine Filterkammer mit Wasserverteiler, wobei dieser eine andere Befestigung als nach Fig. 10 aufweist,
- Fig. 13: einen Wendeeinsatz mit eingesetztem Wasserverteiler,
- Fig. 14: einen Wasserverteiler gem. Fig. 13 im Schnitt,
- Fig. 15: einen Filtereinsatz gem. Fig. 1 in Unteransicht,
- Fig. 16: eine Filterkammer im Schnitt mit LeerLeerkammeransatz und
- Fig. 17: den Filtereinsatz nach Fig. 15 mit Griffösen in Draufsicht.

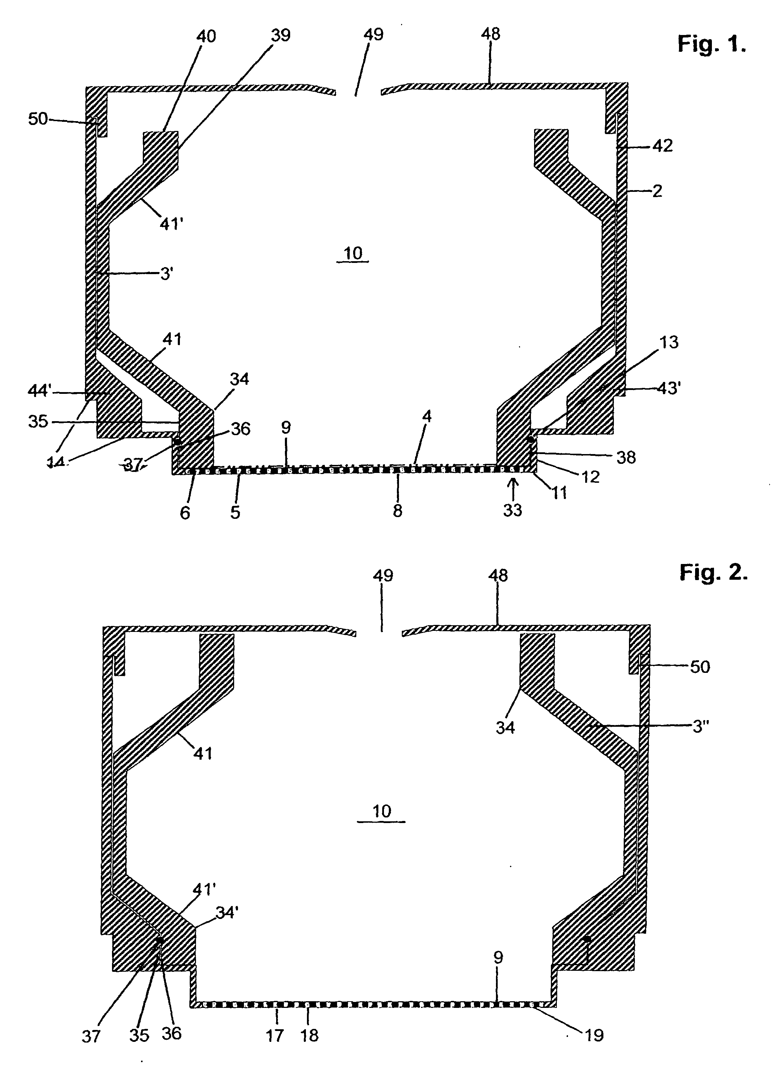

Fig. 1 zeigt den wesentlichen Teil eines Gerätes 1 zur Zubereitung heißer Getränke, vor allem für Kaffee, nämlich die Filterkammer 2. Auf die Darstellung der übrigen Teile des Gerätes 1 ist hier verzichtet worden. In die Filterkammer 2 ist hier ein Filtereinsatz 3 eingeführt, um die vom Filter 4 vorgegebene Filterfläche 9 zu verändern, d. h. hier zu verkleinern. Mit seinem Stützrand 6 liegt dieser Filtereinsatz 3 auf dem Filter 4 und damit auf dem Siebboden 8 so auf, dass dieser Teil des Filters 4 oder des Siebbodens 8 für den Filtervorgang nicht zur Verfügung steht. Von den beispielsweise im Durchmesser 94 mm Siebboden ist so die Filterfläche 9 auf 75 mm Durchmesser reduziert, wodurch die Menge des eingefüllten Getränkesubstrates verringert ist, gleichzeitig aber auch die aktive Filterfläche 9, sodass hier optimal eine Menge von 2 bis 4 Tassen durchgesetzt werden kann.

Wird der Filtereinsatz 3 aus der Filterkammer 2 unter Abheben des Deckels 48 herausgenommen, so steht dann die entsprechend größere Filterfläche 9 zur Verfügung, die auch eine größere Durchsatzmenge von Flüssigkeit bzw. gefilterter Flüssigkeit ermöglicht.

Der Ausführung nach Fig. 1 und auch Fig. 2 steht ein als Wendeeinsatz ausgebildeter Filtereinsatz 3 zur Verfügung. In Fig. 1 stützt sich dieser Filtereinsatz 3 auf der unteren Stufe 12, d. h. hier also gleich auf dem Siebboden 8 ab. Bei der Darstellung nach Fig. 2 ist erkennbar, dass hier der gedrehte bzw. gewendete Filtereinsatz 3 sich mit seinem Stützrand 6 auf der Stufe 13 abstützt, sodass hier die gesamte Filterfläche 9 für den Brüh- oder Auslaugvorgang zur Verfügung steht. Die Unterseite der Stufe 13 bzw. der Stufe 12 dient gleichzeitig als Sitzfläche 14 für den Getränkebehälter, der hier aber nicht dargestellt ist.

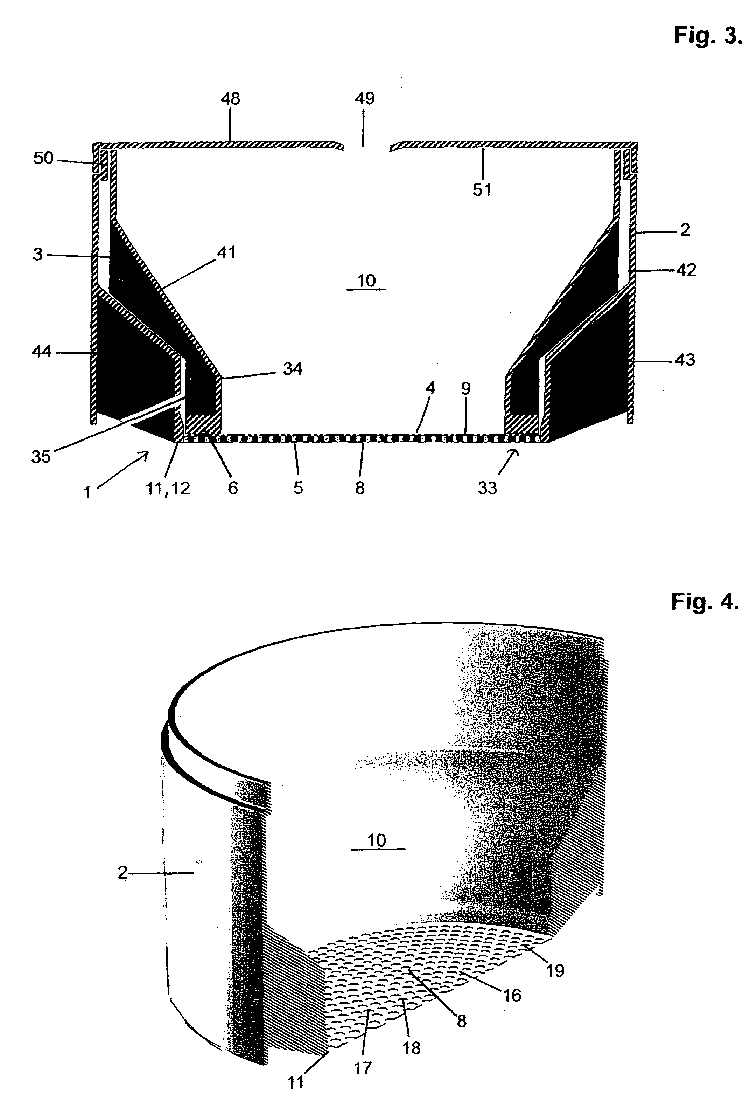

Bei der aus Fig. 3 und auch aus Fig. 4 ersichtlichen Ausführung ist der Boden 11 der Filterkammer 2 gleichzeitig der Siebboden 8, wobei hier eine glatte Ausführung der Oberfläche 16 gewählt ist, sodass die Bohrungen 17, 18, 19 für den Durchlass der Flüssigkeit gleichförmig Sorge tragen können, während der Filter, hier in Form eines Rundpapierfilters 4, für das Rückhalten des Getränkesubstrates und auch der Schwebstoffe sorgt. Der zum Einsatz kommende Einfachfiltereinsatz erfordert ein häufigeres Auswechseln.

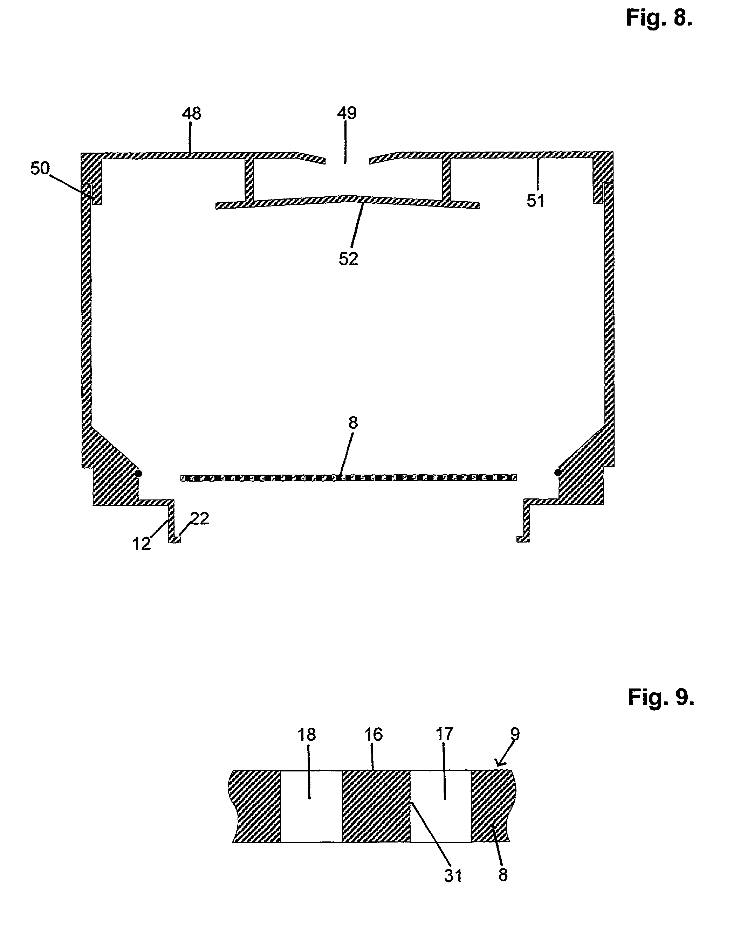

Während gemäß Fig. 4 der Siebboden 8 einteilig mit der Filterkammer 2 ausgebildet ist, sieht Fig. 8 eine Lösung vor, bei der der eigentliche Siebboden 8 lose auf den Vorsprung 22 aufgelegt ist. Die einzelnen Bohrungen 17, 18 sind dabei gem. Fig. 9 mit einer senkrechten Bohrungswandung 31 ausgerüstet, sodass die Flüssigkeit, die den Filter 4 passiert hat, glatt und einfach abfließen kann.

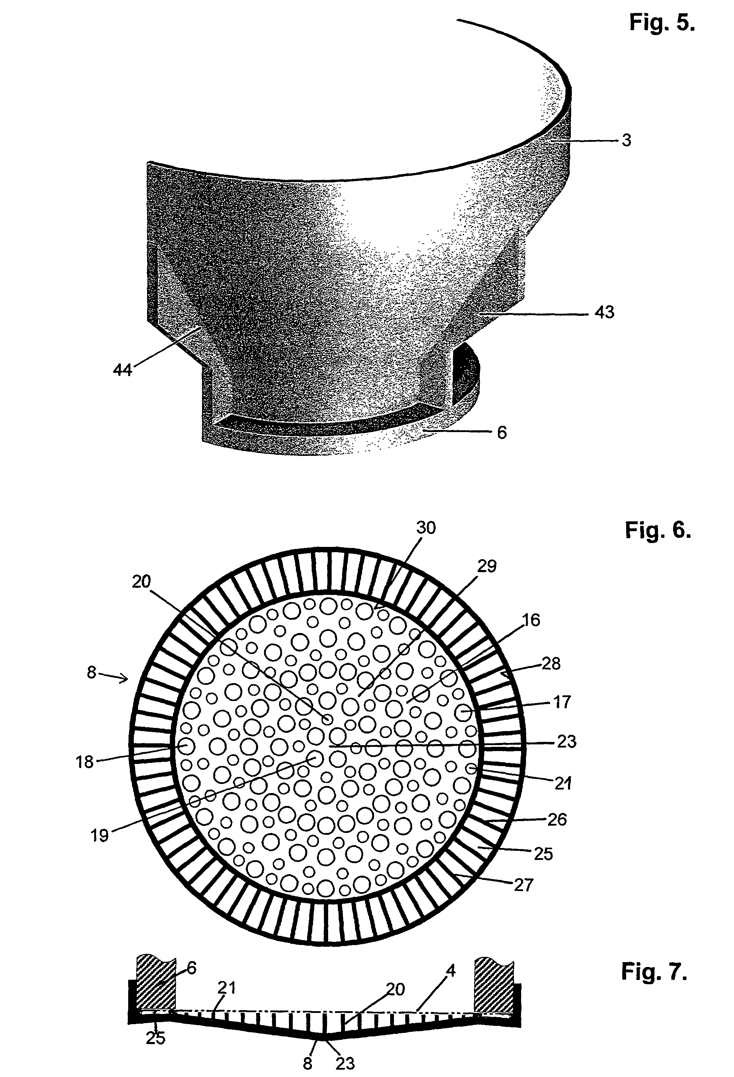

Beim Einsetzen des Filtereinsatzes 3 gem. Ausbildung nach Fig. 1, aber auch nach Fig. 3 erfolgt durch das Auflegen des Stützrandes 6 des Filtereinsatzes 3 auf den Siebboden 8 eine Abdeckung eines Randstreifens 25. Entsprechendes verdeutlicht auch Fig. 7, wo der Stützrand 6 angedeutet ist, der dabei gleichzeitig den Filter 4 auf die hier dargestellten Noppen 20, 21 aufdrückt, bzw. genauer gesagt auf die Stege 26, 27, die hier die Wandung 28 der Filterkammer 2 mit der mittigen Lochplatte 29 bzw. den diese begrenzenden Stützring 30 verbunden sind.

Fig. 6 verdeutlicht die Anordnung der Noppen 20, 21 zwischen den Bohrungen 17, 18, 19, wobei es auch denkbar ist, diese Noppen 20, 21 genau in die Zwischenräume zwischen die ein Dreieck bildenden Bohrungen 17, 18, 19 einzufügen. Weiter vorn ist aber auch bereits darauf hingewiesen worden, dass die aus den Fig. 6 und 7 entnehmbare Ausnehmung mit den Noppen 20, 21 nicht unbedingt erforderlich ist, wenn ausreichend viele Bohrungen 17, 18, 19 vorgesehen ist. Bei der Ausführung nach Fig. 6 könnte auf eine Vielzahl dieser Bohrungen verzichtet werden, weil dort Noppen 20, 21 vorgesehen sind, da diese Noppen 20, 21 dafür sorgen, dass der Filter 4 sich nicht dicht auf den Siebboden 8 auflegen können, sodass ausreichend Durchflussquerschnitt vorhanden ist.

Während gem. Fig. 1 der Randstreifen 25 bzw. ein Ringstreifen 33 für eine verkleinerte Filterfläche 9 sorgt, zeigt Fig. 2 die Ausführung, bei der die gesamte Filterfläche 9 zur Verfügung steht. Hier ist auf die Darstellung des Filters 4 verzichtet.

Dafür ist erkennbar, dass in der Außenwand 35 eine Nut 36 für einen O-Ring 37 vorgesehen ist. Hierdurch wird verhindert, dass Flüssigkeit in den Bereich eindringen kann, der zwischen der Innenwand 42 und dem Filtereinsatz 3 entsteht. Dieser Bereich ist durch den O-Ring 37 völlig abgedeckt und zwar wie der Vergleich mit Fig. 2 zeigt, auch dann, wenn nicht die Seite 38, sondern die Seite 39 des als Wendeeinsatz ausgebildeten Filtereinsatzes 3 zum Einsatz kommt.

Sowohl der Filtereinsatz 3, wie auch der als Wendeeinsatz ausgebildete Filtereinsatz 3' sind im Bereich des Kammerinnenraums 10 bis zum Innenrand 34 als Ringkammer ausgebildet, die entsprechend mit hier nicht dargestelltem Getränkesubstrat ausgefüllt werden kann. Der relativ scharfe Innenrand 34 ist zwar beim Einfüllen von Getränkesubstrat nicht einwandfrei identifizierbar aber immerhin so weit, dass der Benutzer ihn beim Einfüllen erkennen kann. Dies wird noch dadurch erleichtert, dass vom Innenrand 34 sich die Innenwand des Filtereinsatzes 3 trichterförmig erweitert und zwar auch bei dem als Wendeeinsatz ausgebildeten Filtereinsatzes 3'. Entsprechendes verdeutlichen die Figuren 1 bis 3. Hierdurch entsteht der mit 41 bezeichnete Trichter, der beim Wendeeinsatz mit 41' bezeichnet ist.

Fig. 5 verdeutlicht für den einfachen Filtereinsatz 3 die Anordnung von Profilrippen 43, 44, die für eine zusätzliche Abstützung des Filtereinsatzes 3 in der Filterkammer 2 sorgen und zwar zusätzlich zum Stützrand 6 bzw. dem Stützrand 40. So ist sichergestellt, dass der Filtereinsatz 3 immer gleich und sicher in die Filterkammer 2 eingesetzt werden kann, um die Funktion bzw. die Filterfunktion sicher zu wahren.

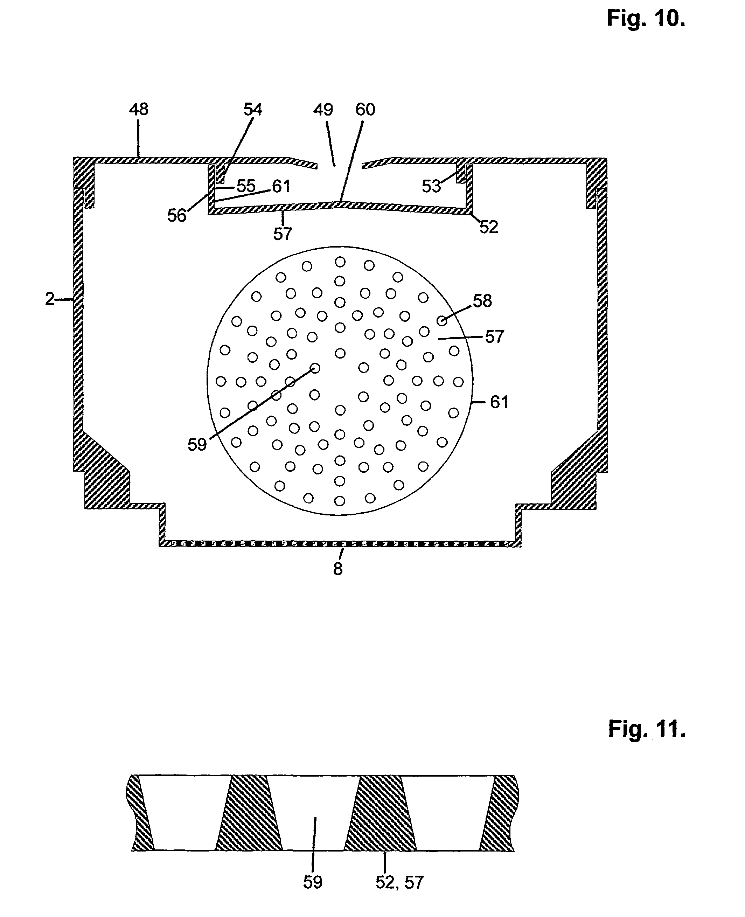

Sowohl Fig. 1, 2 und 3 wie insbesondere auch der Schnitt gemäß Fig. 10 verdeutlicht, dass die Filterkammer 2 über einen Deckel 48 nach oben hin wirksam abgedichtet ist. Hierfür sorgt eine Art Labyrinthdichtung 50, die rundum verlaufend ausgebildet ist und bei den verschiedenen Ausführungen wie in Fig. 1 und 3 angedeutet trichterförmig ausgebildet ist, um einen einwandfreien Wasserzulauf zu ermöglichen und sicherzustellen. Auf der Innenseite 51 des Deckels 48 ist ein Wasserverteiler 52 vorgesehen, der über einen Lochboden 57 verfügt. Dieser Lochboden 57 ist zur Erläuterung mittig der hier dargestellten Filterkammer 2 dargestellt, wobei er natürlich wie aus Fig. 10 ersichtlich, so unterhalb der Heißwasser-Zulauföffnung 49 angeordnet ist, dass das hier zulaufende heiße Wasser zunächst auf den Mittelpunkt oder etwa auf den Mittelpunkt 60 auftrifft, um dann zum Rand 61 hin abzulaufen, weil die Lochboden 57 eine entsprechende Neigung aufweist. Das heiße Wasser tritt dann durch die Lochungen 58, 59 aus und "regnet" gleichmäßig auf den Siebboden 8 bzw. das auf der Filterfläche 9 aufliegende Getränkesubstrat herunter und sorgt dafür, dass dieses schnell und gleichmäßig durchfeuchtet und ausgelaugt wird. Die einzelnen Lochungen 58, 59 weisen nach Fig. 11 eine Trichterform auf, um ein gezieltes Berieseln sicherzustellen. Es ist auch denkbar, dass diese Trichterform noch spitzer zuläuft, um diese Beregnung zu variieren.

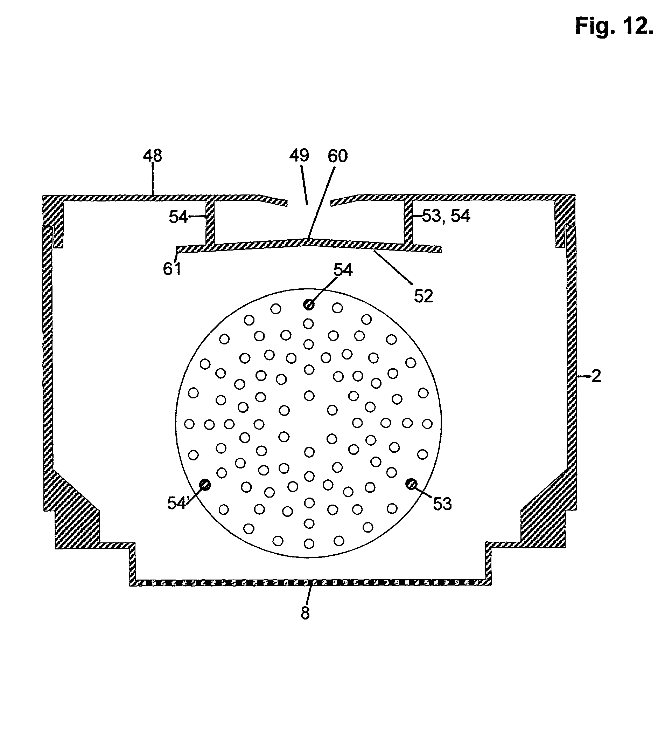

Für die Befestigung des Wasserverteilers 52 auf der Innenseite 51 des Deckels 48 gibt es verschiedene Möglichkeiten. Fig. 10 zeigt eine solche, bei der der Wasserverteiler 52 topfartig ausgebildet ist, d. h. an den Lochboden 57 ist ein Kreisring 56 angesetzt, der auf den Innenflanken 55 eine Art Gewinde aufweist, das mit Gewindestücken an den Stegen 53, 54 korrespondiert. Dadurch ist ein kurzes Aufschrauben des Wasserverteilers 52 auf die Stege 53, 54 möglich, gleichzeitig auch ein entsprechend leichtes Abschrauben, wenn man den Wasserverteiler 52 aus irgendwelchen Gründen reinigen will. Überhaupt ist die Lösung vorteilhaft, weil dadurch eine günstige und einfache Reinigungsmöglichkeit gegeben ist. Darüber hinaus hat dieser Wasserverteiler 52, insbesondere in der hier dargestellten Form, den zusätzlichen Zweck, eine Art Dampfverschluss zu bilden, um zu verhindern, dass der im Kammerinnenraum 10 sich bildende Wasserdampf über die Heißwasser-Auslassöffnung 49 austritt. Die gleiche Aufgabe erfüllt auch der Wasserverteiler 52 gemäß Fig. 12, nur dass hier rundum der Bereich zwischen dem Lochboden 57 und der Innenseite 51 des Deckels 48 nicht verschlossen ist. Vielmehr sind hier drei Stege 53, 54, 54' vorgesehen, an denen der Lochboden 57 festgelegt, beispielsweise verschraubt ist. Eine Dampfsperre bildet er dabei auch, wenn auch nicht so optimal in der Wirkung wie die Ausführung nach Fig. 10.

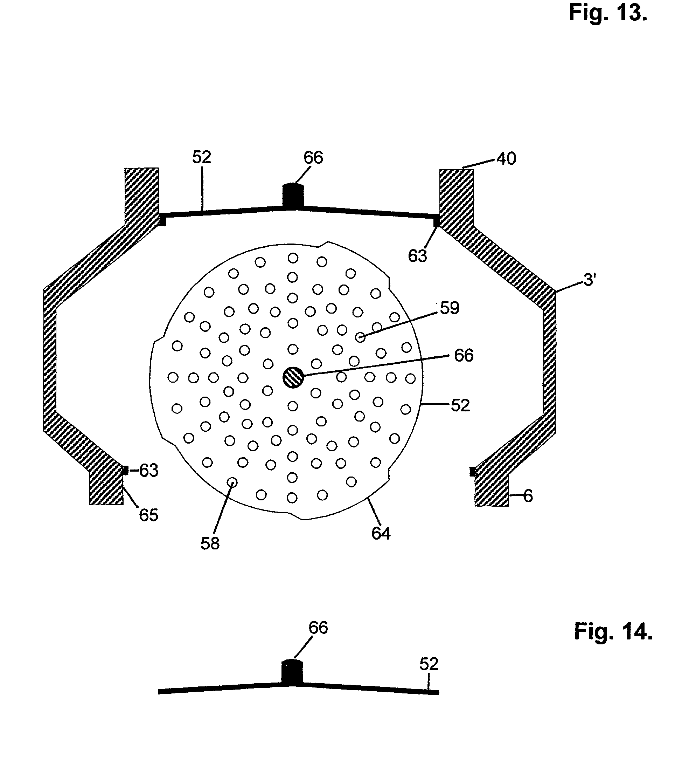

Während in den voran beschriebenen Figuren der Wasserverteiler 52 dem Dekkel 48 zugeordnet ist, sieht die Ausführung nach Fig. 13 vor, dass der mit einem Haltenippel 66 ausgerüstete Wasserverteiler 52 dem Filtereinsatz 3 und auch dem als Wendeeinsatz ausgebildeten Filtereinsatz 3' zugeordnet werden kann. Dieser ist hierzu mit Ansätzen 63 ausgerüstet, auf denen dann der Wasserverteiler 52 abgelegt werden kann, insbesondere auf dem ihm zugeordneten Ansätzen 64. Um mit dem gleichen Wasserverteiler 52 arbeiten zu können, können dessen Ringscheiben mit einem Schiebeteil ausgerüstet werden, sodass ein und dergleiche Wasserverteiler sowohl dem Stützrand 6 wie auch dem Stützrand 40 zugeordnet werden kann. Ein entsprechender Wasserverteiler 52 ist in Fig. 14 angedeutet.

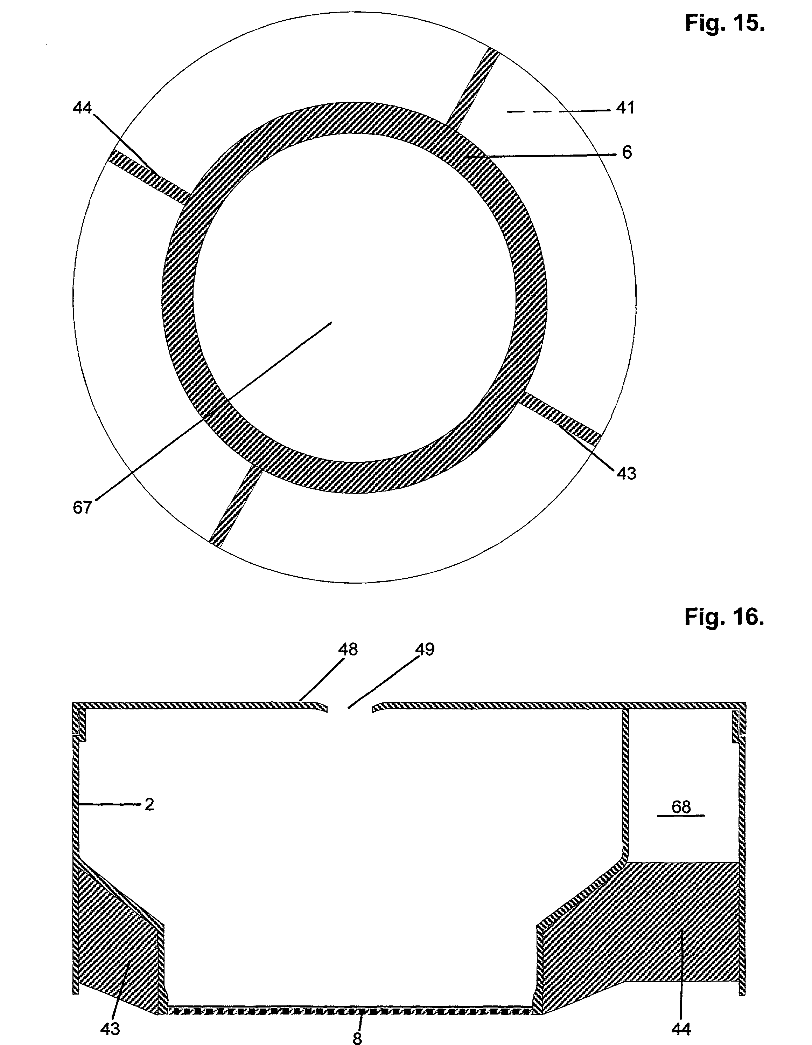

Das Gehäuse der Filterkammer 2 ist in aller Regel kreisrund. Dementsprechend ist dann auch der Filtereinsatz 3 bzw. 3' ausgebildet. Fig. 15 verdeutlicht die Anordnung der schon erwähnten Profilrippen 43, 44, die auf der Unterseite des Filtereinsatzes 3 angeordnet sind. Hier sind vier Profilrippen 43, 44 vorgesehen, die im Prinzip am Stützrand 6 anfangen und sich bis zum Trichter 41 bzw. diesen teilweise mit abstützend erstrecken.

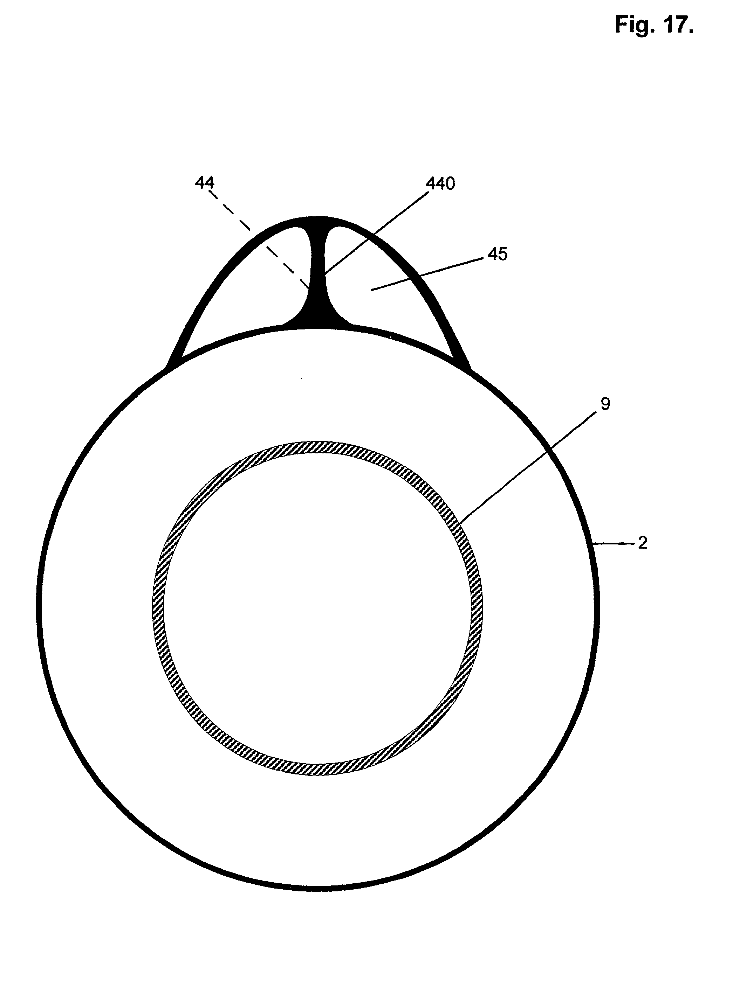

Während die vorher beschriebenen Figuren jeweils runde Filterkammern 2 und Filtereinsätze 3 zeigen, verdeutlichen Fig. 16 und Fig. 17 eine Ausführung, bei der von dieser runden Ausbildung abgewichen wird. Es sind hier verschiedene Ausführungen denkbar, wobei sie problemlos mit dem runden Siebboden 8 korrespondierend eingesetzt werden können, wenn sie als eine Art Leerkammeransatz 45 zum Einsatz kommen. Fig. 16 zeigt den Schnitt, während Fig. 17 die Draufsicht verdeutlicht. Der Leerkammeransatz 45 hat hier quasi die Form eines Ausgusses oder einer Art Ausguss, wobei sich die Profilrippe 440 im oberen Bereich bis in diesen Leerkammeransatz 45 hinein erstreckt. Der Filtereinsatz 3, 3' ist mit der Profilrippe 440 zur besseren Handhabung verbunden, sodass ein Filtereinsatz 3, 3' mit "Handgriff" entsteht. Auch der Deckel 48 ist dann so geformt, dass der Gesamtbereich abgedichtet ist, wobei der entstehende Leerraum 68 für beliebige Zwecke eingesetzt werden kann, da es ein rundum abgedichteter Hohlraum ist. Erkennbar ist hier die Ausbildung der Profilrippen 43, wobei Fig. 17 verdeutlicht, dass die Profilrippe 440 hier die Form einer Grifföse aufweist, um die Handhabbarkeit des gesamten Filtereinsatzes 3 zu verbessern. Mit 67 ist die Durchlauföffnung bei Fig. 15 wiedergegeben, während bei der Filterkammer 2 hier der Siebboden 8 bzw. die Filterfläche 9 den Abschluss bildet.

Ein optimal ausgerüstetes Gerät zum Zubereiten heißer Getränke, insbesondere von Kaffee verfügt über eine Filterkammer 2 beispielsweise der Ausführung nach Fig. 12, wobei in diese Filterkammer 2 ein als Wendeeinsatz ausgebildeter Filtereinsatz 3' einfügbar ist. Dieser Filtereinsatz 3' verfügt an den Innenwänden 65 der Stützränder 6 bzw. 40 über Ansätze 63, auf denen ein Wasserverteiler 52 angeordnet werden kann. Vorteilhaft ist aber vor allem eine Ausführung, bei der dieser Wasserverteiler 52 gemäß Fig. 10 auf der Innenseite 51 des Deckels 48 angeordnet ist. Dieser topfartige Wasserverteiler 52 bildet gleichzeitig eine optimale Dampfsperre. Wird nun das Wasser über die Heißwasser-Zulauföffnung 49 zugegeben, trifft sie etwa auf den Mittelpunkt 60 des Wasserverteilers 52 und wird von hier zum Rand 61 geleitet. Der größte Teil des Wassers tritt dabei durch die Lochungen 58, 59 hindurch und "regnet" auf das Kaffeemehl herunter, das auf dem Siebboden 8 bzw. dem darauf liegenden Filter 4 aufgeschüttet ist. Aufgrund des Aufregnens des heißen Wassers auf dieses Kaffeemehl wird dieses gleichmäßig durchfeuchtet und ausgelaugt ohne dass sich beispielsweise mittig wie bei üblichen Filtern ein Trichter bilden kann. Der gleichmäßig durchfeuchtete Kaffeemehlkuchen wird dabei einschließlich von Schwebstoffen durch das Filterpapier 4 so abgestützt, dass in den Getränkebehälter der gewünschte klare und von Schwebstoffen frei Kaffee eintreten kann.

Der Kernpunkt der Erfindung liegt vor allem darin, dass zur Kaffee- oder Teezubereitung die Flachfilterfläche von 94 mm Durchmesser, die bei drucklosem Brühverfahren nur für Substratdosierung ab 5 bis zu 10 Tassen geeignet ist, durch die speziell darauf ausgerichtete Konstruktion des Einfachfiltereinsatzes 3 wie auch des Wendefiltereinsatzes 3' auf 75 mm Durchmesser reduziert werden kann, um dadurch auch das Aufbrühen von 2 bis 4 Tassen bei ein und derselben Filtergröße zu gewährleisten. Einen ebenso wichtigen Bestandteil der Erfindung dieser Brühtechnik bildet der hierfür entwickelte und erstmalig zur Kaffee- und Teezubereitung mittels eines elektrischen Haushaltsgerätes verwendete Wasserverteiler 42, der bei der Flachfilterbrühtechnik das gleichmäßige Substratbeträufeln ermöglicht bzw. gewährleistet.

Die beiden unterschiedlichen Kernfunktionen der Figuren 1 und 3 bestehen darin, dass bei Fig. 3 die Filterkammer 2 selbst mit der Filterfläche 9 von 94 mm Durchmesser zum Aufbrühen der größeren Getränkemenge dient, während der Filtereinsatz 3 dann zur Anwendung kommt, wenn die Filterfläche 9 zum Aufbrühen der kleineren Getränkemenge mittels Einfachfiltereinsatz 3 auf 75 mm Durchmesser zu reduzieren ist. Im Gegensatz dazu dient bei Fig. 1 die Filterkammer 2 als Positionsbasis für den für jeden Brühvorgang erforderlichen Wendeeinsatz 3', der entweder in Fig. 2 über die gesamte Filterfläche von 94 mm Durchmesser das Aufbrühen der größeren Getränkemenge ermöglicht oder in Fig. 1 mit der auf 75 mm Durchmesser reduzierten Filterfläche, das Aufbrühen der kleineren Getränkemenge gewährleistet.

Alle genannten Merkmale, auch die den Zeichnungen allein zu entnehmenden, werden allein und in Kombination als erfindungswesentlich angesehen.

## Patentansprüche

1. Gerät zum Zubereiten heißer Getränke aus einem Getränkesubstrat und einer Flüssigkeit mit einem die Flüssigkeit zunächst aufnehmenden Heizbehälter mit Heißwasser-Auslauf und einer zugeordneten, das Getränkesubstrat aufnehmenden Filterkammer (2) mit Filtereinsatz (3, 3') und Filter (4), der vor dem Getränkeauslass (5) zum Getränkebehälter angeordnet ist, wobei die Filterkammer (2) mit einem flächigen Siebboden (8) ausgerüstet ist, auf den der Filter (4) auflegbar und der Filtereinsatz (3) aufsetzbar ist,
**dadurch gekennzeichnet,**
**dass** der Filtereinsatz (3) als Wendeeinsatz ausgebildet ist und auf beiden Seiten (38, 39) Stützränder (6, 40) unterschiedlicher Breite aufweist, die durch Abdecken eines mehr oder weniger großen Kreisringes bzw. Ringstreifens (33) die wirksame Filterfläche (9) und die Menge des Getränkesubstrates bestimmend ausgebildet sind.

2. Gerät nach Anspruch 1,
**dadurch gekennzeichnet,**
**dass** der Boden (11) der Filterkammer (2) Stufen (12, 13) aufweisend ausgebildet ist, wobei die den Siebboden (8) aufnehmende Stufe (12) die Sitzfläche (14) für den Getränkebehälter vorgebend ausgeführt ist.

3. Gerät nach einem der vorhergehenden Ansprüche,
**dadurch gekennzeichnet,**
**dass** der Siebboden (8) sich auf einen Vorsprung (22) der Stufe (12) abstützend lösbar mit der Filterkammer (2) verbunden ist.

4. Gerät nach einem der vorhergehenden Ansprüche,
**dadurch gekennzeichnet,**
**dass** die dem Kammerinnenraum (10) zugewandte Oberfläche (16) des Siebbodens (8) mit zwischen den Bohrungen (17, 18, 19) angeordnete Noppen (20, 21) ausgerüstet ist.

5. Gerät nach Anspruch 4,
**dadurch gekennzeichnet,**
**dass** der Siebboden (8) zur Bodenmitte (23) hin einfallend ausgebildet ist, wobei die Länge der Noppen (20, 21) gleichförmig zur Bodenmitte (23) hin zunimmt.

6. Gerät nach Anspruch 4,
**dadurch gekennzeichnet,**
**dass** die Zahl der Bohrungen (17, 18, 19) gegenüber einer keine Noppen aufweisenden Oberfläche reduziert, vorzugsweise auf unter ein Drittel reduziert ist.

7. Gerät nach einem der vorhergehenden Ansprüche,
**dadurch gekennzeichnet,**
**dass** der vom Filtereinsatz (3) zu verdeckende Randstreifen (25) im Abstand angeordnete Stege (26, 27) aufweist, die an der Wandung (28) der Filterkammer (2) und einem die Lochplatte (29) begrenzenden Stützring (30) befestigt sind.

8. Gerät nach einem der vorhergehenden Ansprüche,
**dadurch gekennzeichnet,**
**dass** die Bohrungen (17, 18, 19) im Siebboden (8) eine Kreisform aufweisen und eine senkrechte Bohrungswandung (31).

9. Gerät nach einem der vorhergehenden Ansprüche,
**dadurch gekennzeichnet,**
**dass** der Filtereinsatz (3) einen Stützrand (6) aufweist, der eine die jeweilige Getränkesubstratmenge ungefähr vorgebende Höhe aufweist und sich vom entsprechend vorgegebenen Innenrand (34) aus trichterförmig erweiternd ausgeführt ist.

10. Gerät nach einem der vorhergehenden Ansprüche,
**dadurch gekennzeichnet,**
**dass** in der Außenwand (35) des Stützrandes (6) und/oder der Stufe (12) eine Nut (36) für einen O-Ring (37) ausgebildet ist.

11. Gerät nach einem der vorhergehenden Ansprüche,
**dadurch gekennzeichnet,**
**dass** der Filtereinsatz (3) den Stützrand (6, 40) und den Innenrand (34) mit Trichter (41) mit der Innenwand (42) der Filterkammer (2) abstützend verbindende, im Abstand zueinander angeordnete Profilrippen (43, 44) aufweist.

12. Gerät nach Anspruch 11,
**dadurch gekennzeichnet,**
**dass** über den Umfang verteilt vier Profilrippen (43, 44) vorgesehen sind.

13. Gerät nach Anspruch 9,
**dadurch gekennzeichnet,**
**dass** der Innenrand (34) eine Markierung ergebend ausgebildet, vorzugsweise geformt ist.

14. Gerät nach einem der vorhergehenden Ansprüche,
**dadurch gekennzeichnet,**
**dass** die Profilrippen (43, 44) bzw. eine der Profilrippen (44) bei einer vom Kreis abweichenden Ausführung der Filterkammer (2) in den Leerkammeransatz (45) hineinreichend ausgebildet ist.

15. Gerät nach einem der vorhergehenden Ansprüche,
**dadurch gekennzeichnet,**
**dass** der in den Leerkammeransatz (45) hineinreichenden Profilrippe (44) eine mit dem Filtereinsatz (3) verbundene Grifföse (440) zugeordnet ist.

16. Gerät nach einem der vorhergehenden Ansprüche,
**dadurch gekennzeichnet,**
**dass** der Filterkammer (2) ein lösbar ausgebildeter Deckel (48) mit einer Heißwasser-Zulauföffnung (49) zugeordnet ist, der über eine Art Labyrinthdichtung (50) mit der Filterkammer (2) verbindbar ist.

17. Gerät nach einem der vorhergehenden Ansprüche,
**dadurch gekennzeichnet,**
**dass** auf der Innenseite (51) des Deckels (48) und im Abstand zur Heißwasser-Zulauföffnung (49) ein Wasserverteiler (52) angeordnet ist.

18. Gerät nach einem der vorhergehenden Ansprüche,
**dadurch gekennzeichnet,**
**dass** der Wasserverteiler (52) lösbar mit dem Deckel (48) verbunden ist.

19. Gerät nach einem der vorhergehenden Ansprüche,
**dadurch gekennzeichnet,**
**dass** auf der Innenseite (51) des Deckels (48) mehrere Stege (53, 54) auf einem Kreisbogen angeordnet sind, die Gewindeansätze aufweisen, die mit einem Gewinde an der Innenflanke (55) eines den Wasserverteiler (52) tragenden Kreisringes (56) korrespondierend angeordnet und ausgebildet sind.

20. Gerät nach einem der vorhergehenden Ansprüche,
**dadurch gekennzeichnet,**
**dass** der Wasserverteiler (52) aus Kunststoff besteht und über einen Lochboden (57) verfügt.

21. Gerät nach einem der vorhergehenden Ansprüche,
**dadurch gekennzeichnet,**
**dass** die Lochungen (58, 59) im Lochboden (57) einen unten offenen Trichter bildend ausgeführt sind.

22. Gerät nach einem der vorhergehenden Ansprüche,
**dadurch gekennzeichnet,**
**dass** der Lochboden (57) vom lochfrei ausgebildeten Mittelpunkt (60) zum Rand (61) hin geringfügig abfallend ausgeführt ist.

23. Gerät nach einem der vorhergehenden Ansprüche,
**dadurch gekennzeichnet,**
**dass** der Filtereinsatz (3) auf der Innenwand (65) des Stützrandes (6, 40) einen ringplattenförmigen Wasserverteiler (52) aufnehmende Ansätze (63) aufweist.

## Claims

1. Device for preparing hot beverage from a beverage base and liquid with a heating container, that initially receives the liquid, with a hot water outlet and an associated filter chamber (2), that receives the beverage base, with a filter insert (3, 3') and filter (4), which is-arranged upstream from the beverage outlet (5) to the beverage container, wherein the filter chamber (2) is equipped with a flat sieve base (8), on which the filter (4) can be laid and the filter insert (3) placed, **characterised in that** the filter insert (3) is designed as a reversible insert and on either side (38, 39) has support edges (6, 40) of different widths which are designed so as to determine the effective filter face (9) and the quantity of the beverage base by covering a ring or annular strip (33) of greater or lesser size.

2. Device according to claim 1, **characterised in that** the base (11) of the filter chamber (2) is formed so as to have steps (12, 13), the step (12) receiving the sieve base (8) being designed to predetermine the seat face (14) for the beverage container.

3. Device according to any one of the preceding claims, **characterised in that** the sieve base (8) is detachably connected to the filter chamber (2) so as to be supported on a projection (22) of the step (12).

4. Device according to any one of the preceding claims, **characterised in that** the surface (16) of the sieve base (8) facing the chamber interior (10) is equipped with knobs (20, 21) arranged between the holes (17, 18, 19).

5. Device according to claim 4, **characterised in that** the sieve base (8) is formed so as to sink towards the base centre (23), while the length of the knobs (20, 21) increases uniformly towards the base centre (23).

6. Device according to claim 4, **characterised in that** the number of holes (17, 18, 19) reduces relative to a surface having no knobs, and is preferably reduced to below a third.

7. Device according to any one of the preceding claims, **characterised in that** the edge strip (25) to be covered by the filter insert (3) has spaced-apart webs (26, 27) which are fastened to the wall (28) of the filter chamber (2) and a support ring (30) delimiting the perforated plate (29).

8. Device according to any one of the preceding claims, **characterised in that** the holes (17, 18, 19) in the sieve base (8) have a circular shape and a vertical hole wall (31).

9. Device according to any one of the preceding claims, **characterised in that** the filter insert (3) has a support edge (6) which has a height approximately predetermining the respective beverage base quantity and is designed so as to widen in the manner of a funnel from the correspondingly predetermined inner edge (34).

10. Device according to any one of the preceding claims, **characterised in that** a groove (36) for an O-ring (37) is formed in the outer wall (35) of the support edge (6) and/or the step (12).

11. Device according to any one of the preceding claims, **characterised in that** the filter insert (3) has profiled ribs (43, 44) which are spaced apart from one another and connect the support edge (6, 40) and the inner edge (34) with funnel (41) to the inner wall (42) of the filter chamber (2) in a supporting manner.

12. Device according to claim 11, **characterised in that** four profiled ribs (43, 44) are provided distributed over the periphery.

13. Device according to claim 9, **characterised in that** the inner edge (34) is preferably formed so as to produce a marking.

14. Device according to any one of the preceding claims, **characterised in that** the profiled ribs (43, 44) or one of the profiled ribs (44) is formed so as to reach into the empty chamber shoulder (45) when the filter chamber (2) is designed so as to differ from a circle.

15. Device according to any one of the preceding claims, **characterised in that** a handle lug (440) connected to the filter insert (3) is associated with the profiled rib (44) projecting into the empty chamber shoulder (45).

16. Device according to any one of the preceding claims, **characterised in that** a detachably formed lid (48) with a hot water inlet aperture (49) is associated with the filter chamber (2), the lid (48) being connectable to the filter chamber (2) via a type of labyrinth seal (50).

17. Device according to any one of the preceding claims, **characterised in that** a water distributor (52) is arranged on the inside (51) of the lid (48) and spaced apart from the hot water feed aperture (49).

18. Device according to any one of the preceding claims, **characterised in that** the water distributor (52) is detachably connected to the lid (48).

19. Device according to any one of the preceding claims, **characterised in that** a plurality of webs (53, 54) are arranged on an arc of a circle on the inside (51) of the lid (48), the webs having threaded shoulders, which are arranged and formed so as to correspond with a thread on the inner flank (55) of a ring (56) bearing the water distributor (52).

20. Device according to any one of the preceding claims, **characterised in that** the water distributor (52) consists of plastics material and has a perforated base (57).

21. Device according to any one of the preceding claims, **characterised in that** the perforations (58, 59) in the perforated base (57) are designed to form a funnel which is open at the bottom.

22. Device according to any one of the preceding claims, **characterised in that** the perforated base (57) is designed to fall away slightly from the centre point (60), that is designed free of holes, towards the edge (61).

23. Device according to any one of the preceding claims, **characterised in that** the filter insert (3) on the inner wall (65) of the support edge (6, 40) has shoulders (63) receiving an annular plate-shaped water distributor (52).

## Revendications

1. Appareil pour la préparation de boissons chaudes à partir d'un substrat de boisson et d'un liquide, comportant un récipient chauffant recevant d'abord le liquide avec sortie d'eau chaude, et comportant une chambre filtrante (2) recevant le substrat de boisson, avec garniture de filtre (3, 3') et filtre (4) qui est disposé devant la sortie de boisson (5) vers le récipient à boisson, la chambre filtrante (2) étant équipée d'un fond à tamis (8) plat sur lequel on peut déposer le filtre (4) et placer la garniture de filtre (3),
**caractérisé**
**en ce que** la garniture de filtre (3) est réalisée sous la forme d'une garniture réversible et présente, sur ses deux faces (38, 39), des bords d'appui (6, 40) de largeur différente qui sont réalisés de manière que par recouvrement d'un anneau circulaire plus ou moins grand ou d'une bande annulaire (33), ils déterminent la surface de filtrage (9) utile et la quantité du substrat de boisson.

2. Appareil selon la revendication 1,
**caractérisé**
**en ce que** le fond (11) de la chambre filtrante (2) est réalisé de manière à présenter des gradins (12, 13), le gradin (12) recevant le fond à tamis (8) étant réalisé de manière à prédéfinir la surface d'assise (14) du récipient à boisson.

3. Appareil selon l'une des revendications précédentes,
**caractérisé**
**en ce que** le fond à tamis (8) est relié de manière séparable à la chambre filtrante (2), en prenant appui sur une saillie (22) du gradin (12).

4. Appareil selon l'une des revendications précédentes,
**caractérisé**
**en ce que** la surface (16), tournée vers le volume intérieur (10) de la chambre, du fond à tamis (8), est équipée de boutons (20, 21) disposés entre les perçages (17, 18, 19).

5. Appareil selon la revendication 4,
**caractérisé**
**en ce que** le fond à tamis (8) est réalisé descendant vers le milieu du fond (23), la longueur des boutons (20, 21) augmentant uniformément vers le milieu du fond (23).

6. Appareil selon la revendication 4,
**caractérisé**
**en ce que** le nombre de perçages (17, 18, 19) est réduit par rapport à une surface ne présentant pas de boutons, de préférence à moins d'un tiers.

7. Appareil selon l'une des revendications précédentes,
**caractérisé**
**en ce que** la bande de bordure (25), à recouvrir par la garniture de filtre (3), présente des nervures (26, 27) disposées à distance qui sont fixées sur la paroi (28) de la chambre filtrante (2) et sur une bague d'appui (30) délimitant la plaque perforée (29).

8. Appareil selon l'une des revendications précédentes,
**caractérisé**
**en ce que** les perçages (17, 18, 19) pratiqués dans le fond à tamis (8) présentent une forme circulaire et une paroi de perçage (31) verticale.

9. Appareil selon l'une des revendications précédentes,
**caractérisé**
**en ce que** la garniture de filtre (3) présente un bord d'appui (6) qui présente une hauteur prédéfinissant approximativement la quantité respective de substrat de boisson, et est réalisée de manière à s'élargir en forme d'entonnoir depuis le bord intérieur (34) prédéfini en conséquence.

10. Appareil selon l'une des revendications précédentes,
**caractérisé**
**en ce que** dans la paroi extérieure (35) du bord d'appui (6) et/ou le gradin (12) est réalisée une rainure (36) pour un joint torique (37).

11. Appareil selon l'une des revendications précédentes,
**caractérisé**
**en ce que** la garniture de filtre (3) présente des nervures profilées (43, 44) disposées à distance les unes des autres et reliant, en les soutenant, le bord d'appui (6, 40) et le bord intérieur (34) avec entonnoir (41), à la paroi intérieure (42) de la chambre filtrante (2).

12. Appareil selon la revendication 11,
**caractérisé**
**en ce que** quatre nervures profilées (43, 44) sont prévues réparties sur le pourtour.

13. Appareil selon la revendication 9,
**caractérisé**
**en ce que** le bord intérieur (34) est réalisé, de préférence formé, pour donner un marquage.

14. Appareil selon l'une des revendications précédentes,
**caractérisé,**
**en ce que** les nervures profilées (43, 44) ou l'une des nervures profilées (44) est réalisée de manière à s'étendre à l'intérieur de l'appendice de chambre vide (45) dans le cas où la chambre filtrante (2) est réalisée non circulaire.

15. Appareil selon l'une des revendications précédentes,
**caractérisé**
**en ce qu'**à la nervure profilée (44), s'étendant à l'intérieur de l'appendice de chambre vide (45), est associé un oeillet de préhension (440) relié à la garniture de filtre (3).

16. Appareil selon l'une des revendications précédentes,
**caractérisé**
**en ce qu'**à la chambre filtrante (2) est associé un couvercle (48) réalisé amovible avec une ouverture d'arrivée d'eau chaude (49) qui peut être reliée à la chambre filtrante (2) par une sorte de garniture d'étanchéité à labyrinthe (50).

17. Appareil selon l'une des revendications précédentes,
**caractérisé**
**en ce qu'**un distributeur d'eau (52) est disposé sur la face intérieure (51) du couvercle (48) et à distance de l'ouverture d'arrivée d'eau chaude (49).

18. Appareil selon l'une des revendications précédentes,
**caractérisé**
**en ce que** le distributeur d'eau (52) est relié de manière séparable au couvercle (48).

19. Appareil selon l'une des revendications précédentes,
**caractérisé**
**en ce que** sur la face intérieure (51) du couvercle (48) sont disposées plusieurs nervures (53, 54), sur un arc de cercle, qui comportent des appendices filetés lesquels sont disposés en correspondance et réalisés avec un filetage sur le flanc intérieur (55) d'un anneau circulaire (56) portant le distributeur d'eau (52).

20. Appareil selon l'une des revendications précédentes,
**caractérisé**
**en ce que** le distributeur d'eau (58) est en matière plastique et comporte un fond perforé (57).

21. Appareil selon l'une des revendications précédentes,
**caractérisé**
**en ce que** les perforations (58, 59) pratiquées dans le fond perforé (57) sont réalisées de manière à former un entonnoir ouvert vers le bas.

22. Appareil selon l'une des revendications précédentes,
**caractérisé**
**en ce que** le fond perforé (57) est réalisé légèrement descendant depuis le centre (60) réalisé sans perforations, vers le bord (61).

23. Appareil selon l'une des revendications précédentes,
**caractérisé**
**en ce que** la garniture de filtre (3) présente sur la paroi intérieure (65) du bord d'appui (6, 40), des appendices (63) recevant un distributeur d'eau (58) en forme de plaque annulaire.
